**Europäisches Patentamt**

**European Patent Office**

**Office européen des brevets**

(19)

(11) Veröffentlichungsnummer : **0 254 725 B1**

(12) **EUROPÄISCHE PATENTSCHRIFT**

(45) Veröffentlichungstag der Patentschrift :
26.04.89

(51) Int. Cl.⁴ : **F 16 K 17/08**

(21) Anmeldenummer : **86906777.7**

(22) Anmeldetag : **21.11.86**

(86) Internationale Anmeldenummer :
**PCT/DE 86/00474**

(87) Internationale Veröffentlichungsnummer :
**WO/8703352 (04.06.87 Gazette 87/12)**

(54) **FEDERBELASTETES SICHERHEITSVENTIL FÜR GASE UND DÄMPFE.**

(30) Priorität : **23.11.85 DE 3541495**

(43) Veröffentlichungstag der Anmeldung :
**03.02.88 Patentblatt 88/05**

(45) Bekanntmachung des Hinweises auf die Patenterteilung : **26.04.89 Patentblatt 89/17**

(84) Benannte Vertragsstaaten :
**AT BE CH FR GB IT LI NL SE**

(56) Entgegenhaltungen :
**US-A- 3 001 545**
**US-A- 4 130 130**
**US-A- 4 418 714**

(73) Patentinhaber : **BOPP & REUTHER GMBH**
**Carl-Reuther-Strasse 1**
**D-6800 Mannheim 31 (DE)**

(72) Erfinder : **SCHMITT, Manfred**
**Johann-Casimier-Str. 17**
**D-6701 Friedelsheim (DE)**
Erfinder : **ZITZELSBERGER, Emil**
**Ulmenweg 6**
**D-6148 Heppenheim/Kirschhausen (DE)**

## Beschreibung

Die Erfindung bezieht sich auf ein federbelastetes Sicherheitsventil für Gase und Dämpfe, dessen sich auf den Ventilsitz aufsetzender Ventilteller einen als Hubhilfe wirkenden, den Querschnitt des Ventilsitzes nach außen übergreifenden, innenkegelförmigen Umlenkkragen trägt.

Zweck derartiger Hubhilfen ist einerseits, die in Ventilöffnungsrichtung wirkenden Kräfte durch die Umlenkung am Tellerrand zu vergrößern, damit die mit dem Öffnungshub zunehmende Ventilfederkraft überwunden werden kann. Andererseits soll die Kraftzunahme pro Hubeinheit möglichst konstant sein, das heißt, das Sicherheitsventil soll eine möglichst gerade Kraft-Hub-Kennlinie aufweisen, damit sowohl die Öffnungsdruckdifferenz als auch die Schließdruckdifferenz möglichst klein sind.

Aus dem DE-GM 1 965 020 ist ein federbelastetes Sicherheitsventil bekannt, bei dem der am erweiterten Ventiltellerrand vorgesehene Umlenkkragen als durchgehender Innenkegel ausgebildet ist. Beim Öffnen dieses Sicherheitsventils befindet sich der untere Teil des Umlenkkegels noch weit unterhalb des Ventilsitzes, so daß das ausströmende Medium an der kegelförmigen Strömungsleitfläche des Umlenkkragens entgegen der Zuströmrichtung relativ stark nach unten umgelenkt wird. Mit zunehmendem Hub bewegt sich der Umlenkkegel mit dem Ventilteller weiter in Ventilöffnungsrichtung, wodurch die Einwirkung der schräg verlaufenden Strömungsleitfläche des umlenkkragen auf das ausströmende Medium schwächer wird. Dabei verringert sich die Kraftzunahme pro Hubeinheit und die Kraft-Hub-Kennlinie verflacht. Außerdem wurde erkannt, daß bei dieser konischen Strömungsleitfläche am Umlenkkragen die Kraft-Hub-Kennlinie etwa im ersten Drittel des Hubes einen in Richtung Kraftminderung wirkenden Einbruch aufweist. Durch die Abflachung und durch diesen Einbruch der Kraft-Hub-Kennlinie ergibt sich eine große Arbeitsdruckdifferenz, die gleichbedeutend ist mit der Summe aus Öffnungs- und Schließdruckdifferenz.

Aus der US-PS 2 597 057 ist außerdem bekannt geworden, den Ventilteller in einem feststehenden umlenkzylinder zu führen und am Ventilsitz einen Gewindeeinstellring anzuordnen. Durch die feststehende Unterkante des Umlenkzylinders bleibt zwar der Grad der Umlenkung des ausströmenden Mediums bis zur vollen Ventilöffnungsstellung annähernd erhalten, jedoch ist diese Ventilteller-Gleitführung im Umlenkzylinder relativ aufwendig und birgt die besondere Gefahr, daß sich Schmutzteilchen im Führungsspalt einklemmen, wodurch die Sicherheitsfunktion in Frage gestellt wird. Durch den Einstellring am Ventilsitz läßt sich zwar die Ventilausströmkante in ihrer Höhe variieren und somit die Ausströmung an die Betriebsverhältnisse anpassen, jedoch ist hier eine Verbesserung der Öffnungsdruckdifferenz stets mit einer Verschlechterung der Schließdruckdifferenz oder umgekehrt verbunden. Außerdem läßt sich der Einstellring nur bei Außerbetriebnahme der abzusichernden Anlage verstellen und arretieren.

Der Erfindung liegt die Aufgabe zugrunde, die Hubhilfe für federbelastete Sicherheitsventile so auszubilden, daß mit einfachsten Mitteln niedrige Öffnungs- und Schließdruckdifferenzen erzielt werden, ohne daß dies mit einer Verminderung des Durchflußbeiwertes erkauft werden muß.

Die Lösung dieser Aufgabe wird in den Merkmalen der Patentansprüche gesehen.

Dadurch, daß gemäß den Merkmalen des Anspruchs 1 der Umlenkkragen aus einem Innenkegelabschnitt und einem gegenüber dem Innenkegelabschnitt zur Strömung hin vorspringenden Außenkegelabschnitt besteht, nimmt der sich aus der jeweiligen Hubstellung und damit aus dem jeweiligen engsten Abstand der Strömungsleitfläche des Umlenkkragens zur Außenkante des Ventilsitzes ergebende freie Strömungsquerschnitt nicht wie bei einer durchgehend konischen Strömungsleitfläche progressiv zu sondern erfährt im Bereich der Übergangsstelle zwischen dem Innen- und Außenkegelabschnitt eine Reduzierung des Strömungsquerschnitts-Zuwachses. Durch diese reduzierte Flächenzunahme wird die Druckverteilung entlang der Strömungsleitfläche, deren Integral der Vertikalkomponenten die zusätzliche Ventilöffnungskraft ergibt, so beeinflußt, daß der Krafteinbruch der Kraft-Hub-Kennlinie vermieden und eine annähernd konstante Kraftzunahme pro Hubeinheit erzielt wird. Durch den vorspringenden Außenkegelabschnitt wird gleichzeitig auch der Abflachung der Kraft-Hub-Kennlinie bei großem Hub entgegengewirkt, so daß die Arbeitsdruckdifferenz klein gehalten werden kann.

Damit der Durchflußbeiwert durch die Querschnittsverringerung am Vorsprung des Hubkragens nicht nachteilig beeinflußt wird, sind die beiden Kegelabschnitte an der Übergangsstelle durch einen einen fließenden Übergang gewährleistenden Mittelabschnitt miteinander verbunden, der in dem Kegelmantelbereich angeordnet ist, in dem bei durchgehend konischen Verlauf ein Krafteinbruch in der Kraft-Hub-Kennlinie zu verzeichnen ist.

Der Mittelabschnitt ist hierbei entsprechend dem Merkmal des Anspruchs 2 als schmaler, zur Ventileintrittsachse spitzwinkliger Zwischenkegelabschnitt ausgebildet, wodurch Strömungsablösungen im Bereich des Vorsprunges vermieden werden. Um eine noch weichere Strömungsumlenkung an der Übergangsstelle zu erzielen, ist der Mittelabschnitt entsprechend Anspruch 3 über Radien einerseits mit dem Innenkegelabschnitt und andererseits mit dem Außenkegelabschnitt verbunden.

Der den Vorsprung bildende Mittelabschnitt ist entsprechend Anspruch 4 in einer solchen Höhe am Umlenkkragen angeordnet, daß die Minderung der Strömungsquerschnitts-Zunahme bei etwa einem Drittel des maximalen Ventilhubes wirksam ist. Damit liegt der Mittelabschnitt an der ermittelten Einbruchstelle der Kraft-Hub-Kennlinie eines durchgehend konischen Umlenkkragens.

Es wurde erkannt, daß auch noch am Anfang des Ventilöffnungshubes ein kleiner Einbruch in der Kraft-Hub-Kennlinie in Richtung Kraftminderung auftritt, der den Ventilöffnungsvorgang in der ersten Öffnungsphase verzögert. Um auch diesen Kennlinien-Einbruch zu kompensieren, wird gemäß Anspruch 5 vorgeschlagen, den Außendurchmesser des Ventilsitzes größer als den Außendurchmesser der Dichtfläche des Ventiltellers auszubilden und den Umlenkkragen oberhalb der Dichtfläche über einen Rücksprung an den Ventilteller anzuschließen, so daß die Strömungsleitfläche des Umlenkkragens bei Beginn des Ventilöffnungshubes mit der Außenkante des Ventilsitzes eine Engstelle bildet. Durch die so gebildete Engstelle zwischen der Strömungsleitfläche des Umlenkkragens und der Außenkante des Ventilsitzes wird in der Anfangsphase der Öffnungsbewegung infolge der Drosselwirkung eine zusätzliche Öffnungskraft zum Ausgleich des Krafteinbruches erzielt. Mit zunehmendem Hub wird dieser Spalt so groß, daß die Drosselwirkung entfällt.

Die Erfindung wird anhand eines Ausführungsbeispieles in der Zeichnung näher erläutert, und zwar zeigt :

Fig. 1 ein federbelastetes Sicherheitsventil mit dem erfindungsgemäßen Umlenkkragen im Längsschnitt,

Fig. 2 den Ventilsitz mit Ventilteller und Umlenkkragen in vergrößertem Maßstab in verschiedenen Hubstellungen,

Fig. 3 die typische Kraft-Hub-Kennlinie eines federbelasteten Sicherheitsventil mit durchgehend konisch verlaufendem Umlenkkragen und

Fig. 4 den Ventilsitz mit Ventilteller gemäß Fig. 2 in Ventilschließstellung.

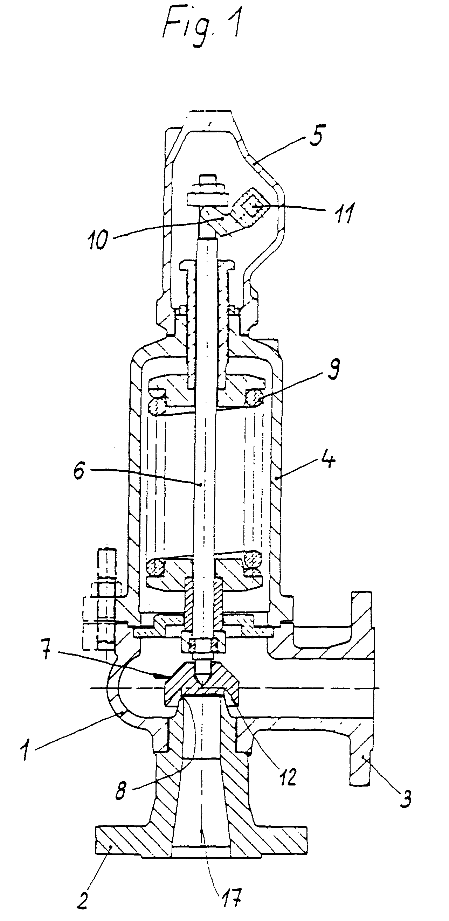

Das in Fig. 1 gezeigte Sicherheitsventil besteht im wesentlichen aus dem Ventilgehäuse 1 mit Eintrittsstutzen 2 und Austrittsstutzen 3, der Federhaube 4 mit Anlüftkappe 5 sowie aus der Ventilspindel 6 mit dem Ventilteller 7 und dem Ventilsitz 8. Durch die Ventilfeder 9 wird der Ventilteller 7 über die Ventilspindel 6 ständig in Ventilschließrichtung gedrückt. Über den Anlüftdaumen 10 und die Anlüftwelle 11 kann das Ventil von außen mechanisch angelüftet werden. Zur Erhöhung der Öffnungskraft trägt der Ventilteller 7 einen den Querschnitt des Ventilsitzes 8 nach außen übergreifenden innenkegelförmigen Umlenkkragen 12.

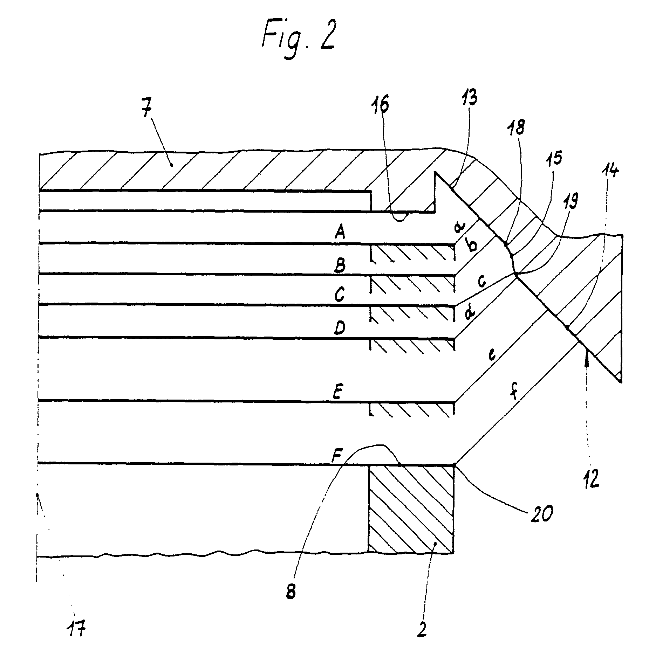

Der Umlenkkragen 12 des Ventiltellers 7 besteht, wie die Fig. 2 zeigt, aus einem inneren Kegelabschnitt 13 und einem äußeren Kegelabschnitt 14. Beide Kegelabschnitte 13 und 14 haben den gleichen Kegelwinkel, jedoch springt der äußere Kegelabschnitt 14 gegenüber dem inneren Kegelabschnitt 13 zur Strömung hin vor. Beide Kegelabschnitte 13 und 14 sind an der Übergangsstelle durch einen Mittelabschnitt 15 so miteinander verbunden, daß sich ein fließender Übergang zwischen den beiden Kegelabschnitten 13 und 14 ergibt. Auf den durch die innere Stirnfläche des Eintrittsstutzens 2 gebildeten Ventilsitz 8 legt sich bei geschlossenem Sicherheitsventil die Dichtfläche 16 des Ventiltellers 7 auf. Der Mittelabschnitt 15 ist als schmaler Zwischenkegelabschnitt ausgebildet, der mit der Ventileintrittsachse 17 einen Winkel einschließt, der kleiner als der Winkel der beiden Kegelabschnitte 13 und 14 aber größer als Null ist. Der Zwischenkegelabschnitt 15 ist über die Radien 18 und 19 einerseits mit dem inneren Kegelabschnitt 13 und andererseits mit dem äußeren Kegelaschnitt 14 fließend verbunden.

Um die Wirkung des erfindungsgemäßen Umlenkkragens besser zu veranschaulichen, sind in Fig. 2 verschiedene Hubstellungen A bis F des Ventiltellers 7 dargestellt, wobei der einfacheren Darstellung halber nicht der Ventilteller 7 sondern der Ventilsitz 8 verschoben worden ist. In den verschiedenen Hubstellungen A bis F strömt der Dampf zwischen den Sitzflächen 8 und 16 radial nach außen und wird durch den Umlenkkragen 12 nach unten umgelenkt. Die Abströmung erfolgt in den verschiedenen Hubstellungen A bis F über die freien Strömungsringquerschnitte a bis f, die sich aus dem jeweils kürzesten Abstand der Strömungsleitfläche des Umlenkkragens 12 zur Außenkante 20 des Ventilsitzes 8 ergeben. Durch den gegenüber dem inneren Kegelabschnitt 13 zur Strömung hin vorspringenden äußeren Kegelabschnitt 14 wird im Bereich des zwischen dem inneren und dem äußeren Kegelabschnitt liegenden Mittelabschnitt 15 die an sich progressiv zunehmende freie Ausströmfläche b bis d in ihrer Zuwachsrate gemindert. Durch diese reduzierte Flächenzunahme wird die Druckverteilung entlang der Strömungsleitfläche so beeinflußt, daß der bei einem durchgehend konischen Umlenkkragen auftretende Krafteinbruch der Kraft-Hub-Kennlinie vermieden wird.

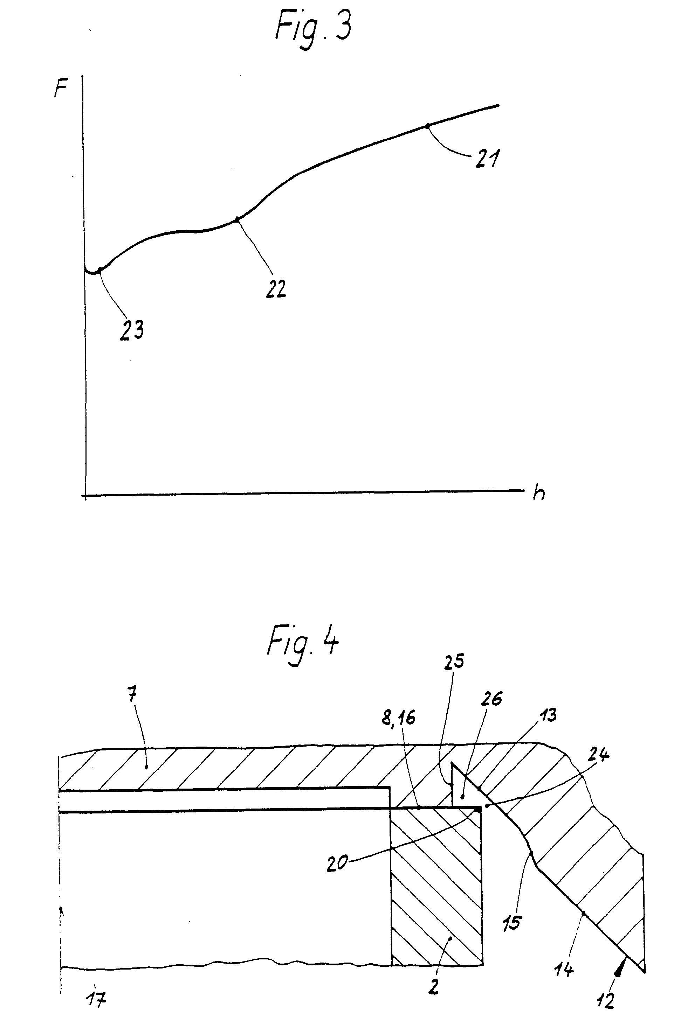

Die Fig. 3 zeigt den typischen Verlauf der Kraft-Hub-Kennlinie 21 bei einem durchgehend konisch ausgebildeten umlenkkragen. Die Kurve 21 zeigt deutlich, daß die Kraft F dort einen Einbruch 22 erfährt, wo der Hub h etwa ein Drittel des maximalen Hubes beträgt. Durch die Minderung der Querschnittszunahme mittels des zur Strömung hin vorspringenden Umlenkkragens wird diese Kennlinieneinbauchung 22 vermieden und eine über den ganzen Hub annähernd konstante Kraftzunahme pro Hubeinheit erzielt.

Die in Fig. 3 gezeigte Kurve 21 zeigt auch, daß bei Beginn des Öffnungshubes ebenfalls ein kleiner Krafteinbruch 23 auftritt. Um auch diesen Krafteinbruch 23 zu vermeiden, sind der Ventilsitz 8 und der innere Kegelabschnitt 13 des Umlenkkragens 12 so ausgebildet, daß sich bei Beginn des Öffnungshubes eine Engstelle 24 ergibt, wie Fig. 4 zeigt. Der Außendurchmesser des Ventilsitzes 8 ist zu diesem Zweck größer als der Außendurchmesser der Dichtfläche 16 des Ventiltellers 7 ausgebildet, und der Umlenkkragen 12 ist oberhalb der Dichtfläche 16 über einen Rücksprung

25 an den Ventilteller 7 angeschlossen. Bei Beginn des Ventilöffnungsvorganges entsteht in der Kammer 26 durch die Drosselung am Engpaß 24 ein Überdruck, der eine zusätzliche Öffnungskraft bewirkt und damit dem Kurveneinbruch 23 entgegenwirkt. Bei weiterer Hubzunahme nimmt die Wirkung der Engstelle 24 ab, so daß die Kraft-Hub-Kennlinie auch im Anfangshubbereich linear verläuft.

**Patentansprüche**

1. Federbelastetes Sicherheitsventil für Gase und Dämpfe, dessen sich auf den Ventilsitz (8) aufsetzender Ventilteller (7) einen als Hubhilfe wirkenden, den Querschnitt des Ventilsitzes (8) nach außen übergreifenden, innenkegelförmigen Umlenkkragen (12) trägt, dadurch gekennzeichnet, daß der Umlenkkragen (12) aus einem inneren Kegelabschnitt (13) und einem im Kegelwinkel gleichen oder annähernd gleichen, jedoch gegenüber dem inneren Kegelabschnitt (13) zur Strömung hin vorspringenden äußeren Kegelabschnitt (14) besteht und beide Kegelabschnitte (13, 14) an der Übergangsstelle durch einen einen fließenden Übergang gewährleistenden Mittelabschnitt (15) miteinander verbunden sind, der in dem Kegelmantelbereich angeordnet ist, in dem bei einem durchgehend konischen Verlauf des Umlenkkragens ein Krafteinbruch in der Kraft-Hub-Kennlinie zu verzeichnen wäre.

2. Sicherheitsventil nach Anspruch 1, dadurch gekennzeichnet, daß der Mittelabschnitt aus einem schmalen Zwischenkegelabschnitt (15) gebildet wird, der mit der Ventileintrittsachse (17) einen Winkel einschließt, der kleiner als der Winkel der beiden Kegelabschnitte (13, 14), aber größer als Null ist.

3. Sicherheitsventil nach Anspruch 1 oder 2, dadurch gekennzeichnet, daß der Mittelabschnitt (15) über Radien (18, 19) einerseits mit dem inneren Kegelabschnitt (13) und andererseits mit dem äußeren Kegelabschnitt (14) fließend verbunden ist.

4. Sicherheitsventil nach einem der Ansprüche 1 bis 3, dadurch gekennzeichnet, daß der den Vorsprung bildende Mittelabschnitt (15) in einer solchen Höhe am Umlenkkragen (12) angeordnet ist, daß die Minderung der Strömungsquerschnittszunahme bei etwa einem Drittel des maximalen Ventilhubes wirksam ist.

5. Sicherheitsventil nach einem der Ansprüche 1 bis 4, dadurch gekennzeichnet, daß der Außendurchmesser des Ventilsitzes (8) größer als der Außendurchmesser der Dichtfläche (16) des Ventiltellers (7) ist und der Umlenkkragen (12) oberhalb der Dichtfläche (16) über einen Rücksprung (25) an den Ventilteller (7) angeschlossen ist, so daß der innere Kegelanschnitt (13) mit der Außenkante (20) des Ventilsitzes (8) bei Beginn des Öffnungshubes eine Engstelle (24) bildet.

**Claims**

1. Spring-loaded safety valve for gases and vapours of which the valve plate (7) abutting the valve seat (8) carries a deflector collar (12) acting as a lift assister engaging outwardly over the cross-section of the valve seat (8) and internally cone-shaped, characterised in that the deflector collar (12) comprises an inner cone section (13) and an outer cone section (14) of the same or approximately the same cone angle but projecting towards the flow relative to the inner cone section and both cone sections are joined to each other at the transition point via a central section (15) ensuring a smooth transition, which is situated in the area of the cone surface, in which an energy peak would register in the force/lift curve in the case of a continuous conical extension of the deflector collar.

2. Safety valve according to claim 1, characterised in that the central section is formed by a narrow intermediate cone section (15) which includes an angle with the valve inlet axis (17) which is smaller than the angle of the two cone sections (13, 14) but greater than zero.

3. Safety valve according to claim 1 or 2, characterised in that the central section (15) is smoothly joined via radii (18, 19) to the inner cone section (13) on the one hand and to the outer cone section (14) on the other hand.

4. Safety valve according to one of claims 1 to 3, characterised in that the central section (15) forming the projection is situated at such a level in the deflector collar (12) that the reduction of the increase in flow cross-section is effective at approximately one third of the maximum valve lift.

5. Safety valve according to one of claims 1 to 4, characterised in that the outer diameter of the valve seat (8) is greater than the outer diameter of the seal surface (16) of the valve plate (7) and the deflector collar (12) is joined above the seal surface (16) to the valve plate (7) via a recess (25), so that the inner cone section (13) forms a narrow point (24) with the outer edge (20) of the valve seat (8) at the beginning of the opening lift.

**Revendications**

1. Soupape de sûreté chargée par ressort pour gaz ou vapeurs, dont le poussoir de soupape (7) qui s'appuie sur le siège de soupape (8) porte un collet déflecteur (12) en forme de cône intérieur servant d'organe auxiliaire de levée et débordant de la section transversale du siège de soupape (8) vers l'extérieur, caractérisée en ce que le collet déflecteur (12) comporte un tronçon de cône intérieur (13) et un tronçon de cône extérieur (14) dont l'angle de cône est identique ou approximativement identique, mais qui, par rapport au tronçon de cône intérieur (13), fait saillie dans l'écoulement, les deux tronçons de cône (13, 14) étant, au niveau du point de jonction, reliés entre eux par un tronçon médian (15) qui assure une transition régulière et est disposé dans la zone d'aire latérale de cône où, dans le cas d'un profil conique continu du collet déflecteur, une rupture de force devrait être inscrite dans la courbe caractéristique de force-levée.

2. Soupape de sûreté selon la revendication 1, caractérisée en ce que le tronçon médian comporte un tronçon de cône intermédiaire effilé (15) qui avec l'axe d'admission (17) de la soupape, délimite un angle inférieur à l'angle des deux tronçons de cône (13, 14), mais supérieur à zéro.

3. Soupape de sûreté selon la revendication 1 ou 2, caractérisée en ce que le tronçon médian (15) est relié d'une manière régulière, d'un côté, au tronçon de cône intérieur (13) et, de l'autre, au tronçon de cône extérieur (14) par l'intermédiaire de rayons (18, 19).

4. Soupape de sûreté selon l'une des revendications 1 à 3, caractérisée en ce que le tronçon médian (15) définissant la partie en saillie est disposé, au niveau du collet déflecteur (12), à une hauteur telle que la diminution de l'élargissement de la section de passage est effective sur un tiers de la levée maximale de la soupape.

5. Soupape de sûreté selon l'une des revendications 1 à 4, caractérisée en ce que le diamètre extérieur du siège de soupape (8) est supérieur au diamètre extérieur de la surface d'étanchéité (16) du poussoir de soupape (7), tandis que le collet déflecteur (12) est rattaché au poussoir de soupape (7) au-dessus de la surface d'étanchéité (16) par l'intermédiaire d'un épaulement (25), de sorte qu'au début de la course d'ouverture, le tronçon de cône intérieur (13) définit un étranglement (24) avec le bord extérieur (20) du siège de soupape (8).

Fig. 1

# Fig. 2

# Fig. 3

# Fig. 4